# EUROPEAN PATENT SPECIFICATION

(11) **EP 1 563 003 B1**
(45) Date of publication and mention of the grant of the patent: **23.11.2016**
(21) Application number: 03750619.3
(22) Date of filing: 25.09.2003
(51) Int. Cl.: C08J 7/16, C08F 255/02, C09D 5/18, C09K 21/00, B32B 17/04, B32B 33/00

(54) **METHOD FOR IMPROVING FIRE RESISTANCE OF POLYETHYLENE TUBING AND POLYETHYLENE TUBING MANUFACTURED ACCORDING TO SAID METHOD**
FLAMMHEMMENDE SCHICHT FÜR SUBSTRATE UND METHODE
PROCEDE D'AMELIORATION DE LA RESISTANCE AU FEU DE TUBES EN POLYETHYLENE, ET TUBES EN POLYETHYLENE FABRIQUES SELON LEDIT PROCEDE

(30) Priority: 25.09.2002 US 255013
(43) Date of publication of application: 17.08.2005
(73) Proprietor: Logstor A/S, 9670 Løgstør (DK)
(72) Inventor: BERTH, Jörgen, Mikael, DK-8900 Randers (DK)
(74) Representative: Zacco Denmark A/S
(86) International application number: PCT/EP2003/010643
(87) International publication number: WO 2004/029138

(56) References cited:
- WO-A-01/85829
- DE-A- 2 063 815
- US-A- 3 915 777
- US-A- 5 758 694
- US-A- 6 001 894

## Description

### BACKGROUND OF THE INVENTION

Polyethylene ("PE") has many desirable mechanical properties and it is readily synthesized, and manufactured in any desired shape and size. In particular, there are many uses for PE, in its several grades, and particularly for high density polyethylene ("HDPE") in the form of tubing, pipes, conduits, and the like. For ease of reference, the use of the term, "pipe" or "piping" in the singular or plural herein, should be understood to also encompass any other configuration of tubing or conduit, and the joiner and/or connector components, such as straight joints, elbow joints, end-caps and the like, unless otherwise specified.

It is also known to the art that many potential uses for pipe comprising PE, in whole or in part, have previously been impractical due to the inherent limitations of this polymer material. This is of particular concern in the manufacture of extruded, pre-insulated pipes for general industry, the building trades, ocean platforms, e.g., offshore oil and gas platforms, and ship building. HDPE pipes, including insulated pipes with an HDPE outer shell, are economical to manufacture and install, light, strong, and corrosion resistant. Of particular importance for the oil, gas, ship-building industry and any other industrial use, pre-insulated pipes extruded from HDPE is more resistant to penetration of moisture into the insulating layer than are conventional insulated pipes. However, there are obstacles to wider use of this type of pre-insulated pipe manufactured solely from polymer materials. The most important obstacle is that pipe manufactured from conventional PE-based polymers, including HDPE, is generally unsuitable for use in areas where flame retardancy is required. For example, the melting point for HDPE is about 120°C. When exposed to sufficient heat for even a brief period of time, HDPE readily melts and forms burning drops which can spread fire and/or cause severe burns on contact with human skin and clothing. Once ignited, HDPE bums intensely, producing noxious gas and smoke.

Previous efforts to address some of these shortcomings in HDPE pipes have required the use of a metal-j acketed pre-insulated pipe for the outer shell to provide flame retardancy and paintability. However, the use of a metal jacket, e.g., steel, as the outer shell adds weight and cost to manufacture and installation, among other limitations,

Another way in which the fire resistant properties of materials formed of PE-based polymers have previously been enhanced is by blending other polymers with the stock polyethylene, before extrusion, to impart flame retardant properties. For example, various products are commercially available in the form of granules, which, when blended with HDPE during manufacture, imparts some protection against heat and flame. However, they all have the disadvantage that they change the mechanical properties for polyethylene. In addition, the processing requirements of blending other polymers into the HDPE adds to the costs of materials, and requires custom manufacture, which makes it difficult to economically supply pipe as required by the end user in the various industries.

Another possible method for enhancing the flame retardant properties of HDPE pipes is by grafting or bonding coatings having fire retardant properties onto the surface of the pipe. Although these processes have been successful in improving the fire retardant properties of HDPE these properties have not been improved to such an extent to make pipe constructed from HDPE commercial viable and/or in compliance with fire retardant standards relating to the use of materials in certain industries. For example, prior art HDPE pipe treated with fire retardant grafting coatings have failed to comply with U.S. Navy standards which are dictated by IMO 653 and IMO 753 (International Maritime Organization Standards) and/or German industrial fire safety requirements under DIN 4102.

Thus, there remains a longstanding need in the art for a method for improving the fire retardant properties of PE, including HDPE and other PE-based polymers.

### SUMMARY OF THE INVENTION

Accordingly, the present invention provides a method of improving the fire retardant properties of PE, including HDPE, crosslinked PE and other PE-based polymer compositions. The inventive method includes a first step of applying a polyfunctional monomers/prepolymers, such as, for example, vinyl monomers, urethane and epoxy prepolymers which are chemically bonded to the PE surface by the grafting process provided herein. The method according to the present invention further includes the application of fiberglass, or any other fire resistant fiber material, in the form of loose granulated fibers to the coated PE surface.

One embodiment described herein includes the steps of:
(a) applying to a PE substrate, e.g., a solid PE, a liquid composition that includes effective amounts of a monomer or prepolymer, a graft initiator, a catalyst and a polymerization promoter, under conditions effective to promote grafting of the monomer or prepolymer to the solid polyethylene substrate, to form a coating on the substrate,
(b) applying a fiberglass mesh on top of the applied liquid composition,
(c) applying additional liquid composition of the type described in step (a) on top of the layer of fiberglass applied in step (b), and
(d) curing the applied composition.

An embodiment of the method according to the present invention includes the steps of :
(a) applying to a PE substrate, e.g., a solid PE, a liquid composition that includes effective amounts of a monomer or prepolymer, a graft initiator, a catalyst and a polymerization promoter, under conditions effective to promote grafting of the monomer or prepolymer to the solid polyethylene substrate, to form a coating on the substrate,
(b) applying granulated fiberglass fiber on top of the applied liquid composition,
(c) applying additional liquid composition of the type described in step (a) on top of the layer of fiberglass applied in step (b), and
(d) curing the applied composition.

Still another embodiment of the method according to the present invention includes the steps of :
(a) applying to a PE substrate, e.g., a solid PE, a mixture including (I) a liquid composition that includes effective amounts of a monomer or prepolymer, a graft initiator, a catalyst and a polymerization promoter, and (ii) granulated fiberglass fiber, under conditions effective to promote grafting of the monomer or prepolymer to the solid polyethylene substrate, to form a coating on the substrate, and
(b) curing the applied composition.

Optionally, the liquid composition utilized in the present method includes a pre-formed polymer, suitable to be grafted to the activated substrate surface, alone and/or in combination with one or more of the monomer/prepolymers. The polymer is, e.g., a vinyl polymer, a urethane, an epoxy, a polysilicone, and/or combinations thereof, suitable to be grafted to the PE surface. In a further optional embodiment, the liquid composition also includes a colorant such as a dye or pigment, and/or a fire retardant agent.

In another embodiment of the method according to the present invention, the liquid composition is first prepared without the polymerization promoter, and the process further comprises the step of mixing the polymerization promoter with the liquid composition prior to application of the liquid composition to the substrate, which allows for a longer storage period for the prepared liquid composition.

The monomer or prepolymer is a vinyl monomer, a urethane monomer, an epoxy monomer and/or a silicon-based monomer or prepolymer. The graft initiator is an effective amount of a metal ion, e.g., present in a concentration ranging from about 0.01 to about 1.0%, by weight. For example the metal ion is an ion of iron, silver, cobalt, copper, cerium and/or combinations thereof. The catalyst is a peroxide present in the liquid composition in a concentration ranging from about 0.1 to about 5% by weight and includes, e.g., benzoyl peroxide, methyl ethyl ketone peroxide, 1-butyl hydroperoxide and/or combinations thereof. The polymerization promoter is a polyfunctional aziridine liquid crosslinker.

Optionally, the applied composition is self-curing, and/or cured by heating, and/or by exposure to ambient atmospheric moisture, e.g., when the monomer or prepolymer is a moisture curing (e.g., a moisture curing urethane). Depending upon the required conditions, the applied graft coating is cured at room temperature, e.g., for a period of time as long as 6 days, or by the application of heat, e.g., ranging up to about 95 degrees C for a time period of as little as 30 minutes.

The present invention also provides for a graft coated substrate that includes one or more types of PE, wherein the graft coating is covalently bonded to the substrate, and the coating includes a non-polyethylene polymer or copolymer, such as a vinyl polymer, a urethane, an epoxy, a polysilicone and/or combinations thereof and a fire retarding agent. Optionally, the graft coating also includes a pigment or colorant. The coated substrate further including a layer of fiberglass material, the graft coating functioning to adhere the fiberglass material to the substrate.

The substrate is preferably formed into an article of manufacture, either before or after the graft coating is applied to the substrate. The article of manufacture is any article suitable to be manufactured from material that includes a PE. Simply by way of example, the article of manufacture is advantageously a pipe or tube, a curved or planar sheet, a beam, a board, a rod or shaft, a container for solids or fluids, and/or combinations thereof.

Pipe formed according to the invention includes, for example, straight pipe, bent pipe, a straight pipe joint, an elbow joint, an end-cap, a heat-shrinkable joint, and combinations thereof. The graft coated polyethylene substrate according to the invention also includes, for example, single wall pipe, pipe with a plurality of walls nested one within the other, pipe with a single insulating layer between two concentric walls, and pipe with a plurality of concentric insulating layers, to name but a few types of pipe that will benefit from the graft coating compositions and methods of the invention.

### DETAILED DESCRIPTION

The term "substrate" as used herein includes any object that is comprised of any PE or PE-based polymer or copolymer, e.g., PE formed into sheets, tubes, girders, clamps, brackets, folded sheets, and any other useful form or geometric shape. Optionally, the substrate is formed of solid PE, i.e., forms of PE that exclude fabric and/or fibrous forms of PE. Reference to "polyethylene" or "PE" herein should be understood to include all grades of polyethylene and/or mixtures of PE grades, unless otherwise specified. The PE can be substantially pure, e.g., comprising no more than 5% by weight of non-polyethylene materials. Alternatively, the PE is blended or mixed, or formed as a copolymer, in combination with other polymers, and/or derivatives of polyethylene.

Broadly, the method according to the present invention includes the steps of:
(a) applying to a PE substrate, e.g., a solid PE, a liquid composition that includes effective amounts of a monomer or prepolymer, a graft initiator, a catalyst and a polymerization promoter, under conditions effective to promote grafting of the monomer or prepolymer to the solid polyethylene substrate, to form a coating on the substrate,
(b) applying fiberglass in a suitable form on top of the applied liquid composition,
(c) applying additional liquid composition of the type described in step (a) on top of the layer of fiberglass applied in step (b), and
(d) curing the applied composition.

Each of the compositions, materials and steps utilized in the method according to the present invention are discussed in greater detail below.

Without meaning to be bound by any theory or hypothesis as to any proposed mechanism underlying the grafting reaction of the inventive process, the grafting reaction described herein is believed to take place by means of a chain polymerization. This type of polymerization reaction, also referred to in the art as a "backbiting" reaction, consists of initiation and propagation reactions. Essentially, a graft initiator is contacted with the surface to be treated, e.g., a surface of an article formed in whole, or in part, of PE. It is believed that the graft initiator removes a hydrogen from the PE surface, and thereby induces radical formation in the polyethylene substrate. The radicals thus formed attack nearby carbon bonds, breaking the polyethylene chain(s). Once the substrate has been activated, selected polymers are linked to the substrate and/or selected monomers react to extend graft polymer chains onto the substrate surface at the activated break points. Further details concerning the inventive graft coatings and methods of making these coatings, are discussed below.

### Substrates: Polyethylenes And Copolymers

As noted *supra*, the grafting process can be applied to all grades of polyethylene, including derivatives, and mixtures and PE-copolymers formed with other types of polymer.

Preferably the polyethylene to be graft coated is a high density polyethylene or HDPE (>0.940 g cm cm⁻³ >0.0338 lb/in cm³, MW approx. 100000 or higher);
Other embodiments of graft coated PE are formed from high density, high molecular weight polyethylene or HDPE-HWM (MW ranges from about 200,000 to about 500,000);
Further embodiments of graft coated PE are formed from HDPE-UHWM; High density, Ultra high molecular weight polyethylene (>0.940 g cm⁻³> 0,0338 lb/in³, MW > 10⁶ to 6 x 10⁶);
Further still, there are useful embodiments of the invention that are formed by graft coating PE-LD: Low density polyethylene (>0.930 g cm⁻³ > 0,0334 lb/in³), as well as PE-LLD: Linear low density polyethylene (>0.918 to 0.935 g cm⁻³ / 0,0334 to 0,0339 lb/in³); PE-MD: medium density polyethylene (>0.930 to 0.940 g cm⁻³ 0.0334 to 0.338 lb/in³); and combinations and blends of the above described grades of PE.

In further still embodiments of the invention, mixtures and blends of the above described PE with other polymers are also contemplated to be advantageously graft coated according to the invention. For example, shrinkable pipe joints are manufactured from two different types of polymer. A first type of shrinkable pipe joint is a mix of HDPE and PE-MD, and a second type is a mix of ethylene / vinyl acetate ("EVA") and PE-LD. Both types of PE, as well as other types, including polyethylene modified with flexible butyl-based rubber or polymer, are readily graft coated.

Of course, the artisan will appreciate that any other art-known types and grades of polyethylene-based materials not mentioned above will also benefit from grafting by the methods and compositions of the invention.

Articles of manufacture that can serve as useful substrates for graft coatings according to the invention include, for example, any art known pipe or pipe accessory or fitting.

Among pipe products preferably manufactured with the graft coatings of the invention are both pre-insulated and non-insulated PE pipes. In addition, pipe fittings, including joints, such as straight joints, elbow joints, T-joints and end caps, etc., are also contemplated to be manufactured with the graft coating of the invention.

Pre-insulated pipes include pipes manufactured with one or more insulating layers. Preferably, there are one or two insulating layers, although the artisan will readily appreciate that additional insulating layers are readily added when desired. For example, a pipe is readily constructed to include an inner carrier pipe, an insulating foam layer, e.g., a hard polyurethane, and a jacket of PE, such as HDPE, with a graft coating according to the invention applied to its outer surface. Such a pipe can optionally include additional art-known technical features, such as a tracer pipe embedded within the polyurethane foam insulation.

The inner carrier pipe is constructed of a material suitable for the intended purpose, and can comprise steel, copper, brass, or other art-known alloy, any of the various PE compositions mentioned *supra*, any commercially available epoxy fiberglass and/or polyvinyl polymer pipe, to name but a few possibilities. Where desired, when the inner carrier pipe comprises PE, the inner surface can optionally be coated with a graft coating according to the invention, to enhance the properties of the carrier pipe lining and to provide, for example, improved resistance to heat, solvent penetration, and microbial contamination, to name but a few ways that the inner surface of PE-based carrier pipe can be enhanced.

In a further embodiment, a multi-layer pre-insulated pipe can include one or more additional insulating layers, comprising the polyurethane foam found in the first layer, and/or optionally the second layer is manufactured from different insulation materials, including heat resistant fibrous materials such as, mineral wool and/or glass wool, or any other art-known insulating material.

In addition to pipes and pipe related articles, other types of articles too numerous to mention can be fabricated from polymers that include PE, and then graft coated for improved surface properties. Simply by way of example, graft coated articles that comprise PE include those suitable for use in space filling and structural support, in the form of sheets, boards, shafts rods, or structural tubing, or in any other convenient shape or size that is desired.

Other examples of graft coated articles that comprise PE include boxes and containers fabricated in whole or in part with PE, For such containers, graft coating enhances such desirable properties as scratch resistance, paintability for ease of post-manufacture coating, marking or gluing, and flame retardancy for use in areas where this property is important. Flame retardancy in PE-based containers is important, for example, in boxes or containers that will be densely stacked in warehouses, that will hold safety equipment on ships, aircraft and other vehicles, and in the manufacture of containers for storing volatile and/or flammable solids, or flammable liquids such s fuels. Other containers comprised ofPE that benefit from improved surface properties and reduced flammability include those for storing food oils, paints, solvents, cleaning agents, and the like.

### Grafting Mechanisms and Reactions

The graft reaction can be better understood by considering the following steps (1a) through (3), wherein PE or - [CH₂ - CH₂]ₙ - is the substrate ("S") the graft initiator is GI* and R' is the residue of the polyethylene chain. X is a unit of vinyl monomer. The selection of X governs the property or properties that are obtained. Optionally, a mixture of monomers are employed, and more than one property of the PE substrate can be modified or enhanced in a single processing step.

In step (1) the GI* induces radical formation ("S*") in the polyethylene substrate (1a).

Alternatively, the GI* activates reactive prepolymers or polymers ("P") in the reaction medium, to P* (1b) that in turn directly grafts to the HDP (1c).

s - H + GI* → S* + H⁺ + GI (1a)

GI* + P → P* + GI (1b)

S-H + P* → S-P (1c)

When the reaction proceeds according to step (1a), initiation occurs as shown by step (2) below,

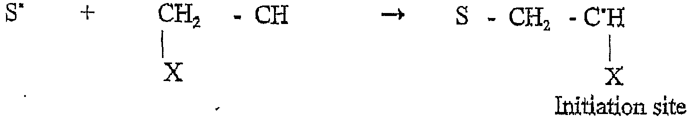

In step (3), chain propagation occurs, and continues.

### (3) Chain Propagation

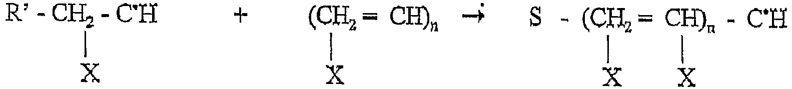

The graft initiator is optionally regenerated by reaction (4), as follows:

ROOH + GI → RO^{•} + OH^{•} + GI* (4)

Peroxide

The process may be terminated by radical combination as shown in reactions (5) and (6) 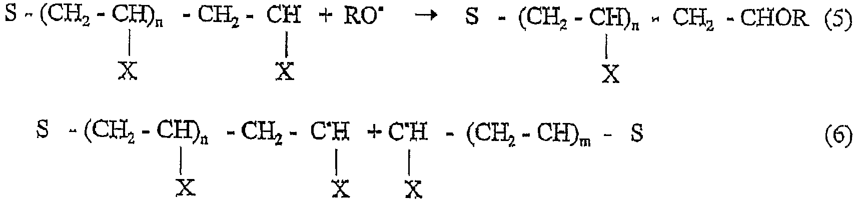 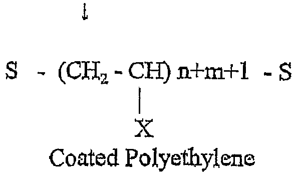 (Wherein, n and m are integers defining subunit number, and can be the same or different.)

Thus, when the reaction proceeds from step (1a) through steps (2) and (3), the new polymer structure forms at the initiation site and the chain is lengthened from that point until the reaction is terminated. When the reaction proceeds from steps (1b) and (1c); a performed reactive polymer is linked directly with the PE surface. Both alternative reactions provide a coated polyethylene material that possess all the desirable properties of the selected grafted polymer coating.

### Preparation of the Grafting Solution

As exemplified below, the grafting process is conducted by preparing a grafting solution. The grafting solution is applied to a PE substrate, exemplified as HDPE, by any available art-known method, including e.g., brushing, spraying, dipping, spin coating, vapor deposition, and the live. The viscosity of the grafting solution is adjusted as needed, so that, for example, it is sufficiently viscous for application by dipping or brushing, without significant dripping or running of the applied solution, or sufficiently thin when optionally sprayed onto the surface to be treated.

For convenience, the grafting solution is optionally prepared in two parts: Part A and Part B.

### Formulation of Part A

Part A of the grafting solution is prepared in a solvent compatible with the reagents selected for the grafting. Solvents are selected depending on the prepolymer and/or monomers employed, and can include polar solvents such as water, water soluble alcohols, ethers, esters, ketones, and derivatives and mixtures thereof, and nonpolar solvents such as organic solvents, e.g., aromatic solvents such as benzene and its derivatives, alkanes and/or alkenes and their derivatives, halogenated organic solvents, other readily available solvents.

Graft initiators are preferably metal ions including, for example, iron, silver, cobalt, copper, cerium and others. More preferably, as exemplified herein, silver ion is employed. The graft initiators are preferably employed at a concentration ranging from about 0.01 to about 1.0%, and more preferably from about 0.001 to about 0.1% by weight, relative to the weight of prepolymer or monomer(s) present.

Catalysts are preferably peroxides, including, for example, hydrogen peroxide and any organic peroxide, such as, e.g., benzoyl peroxide, methyl ethyl ketone peroxide, 1-butyl hydroperoxide and derivatives and combinations thereof. The catalysts are preferably employed in a concentration ranging from about 0,1 to about 5%, or greater. More preferably, the catalysts are employed in a concentration ranging from about 0.05 to about 1.0% (by wt relative to the solution weight).

Monomers or prepolymers include, for example, organic-based monomers, silicon-based monomers, and/or combinations thereof. Organic-based monomers useful for grafting surfaces comprising PE preferably include urethane precursors. Urethane precursors include water-dispersed polyurethane monomers, e.g., NeoRez™ R-9679 (Avecia, Inc., Charlotte, North Carolina). Other water-dispersed prepolymers include epoxy monomers, e.g., preferably including the epoxy monomer available as Epi-Rez™ (Shell Chemical Co., Parsippany, New Jersey).

Aliphatic moisture-curable urethanes are also employed, e.g., the Spenlite™ M27-X-63 and/or the less viscous M22-X-40 (Reichhold Chemical, Inc., Research Triangle Park, North Carolina), and D.R.R. G84 EK 40 epoxy resin (Dow Chemical) and/or combinations thereof.

Aromatic moisture curing urethanes include, for example, the Spenkel™M21-X-40, M21-X-40LM, M23-X-56, M37-A6X-42, M67-100, M26-X-64 and M86-A6X-60 and/or combinations thereof (Reichhold Chemical, Inc., Research Triangle Park, North Carolina).

Aromatic urethane prepolymers include, for example, the Spenkel™ P49-A60, P82-K4-75, and/or combinations thereof (Reichhold Chemical, Inc., Research Triangle Park, North Carolina). Other art-known epoxy resins/prepolymers are also readily employed. These include, for example, epoxy prepolymer Araldite GZ 488-N-40, epoxy resin (Ciba Geigy Corp.)

Silicon-based monomers useful for grafting surfaces comprising PE preferably include silane prepolymers. Readily available silane monomers include organic silanes such as, vinyl alkyl-ethoxysilanes, e.g., vinyl triethoxy silane and vinyl trimethoxy silane monomers, e.g., SiV 9112.0 and SiV 9220.0, respectively, from Galest, Inc., Tullytown, Pennsylvania), to name but a few. Combinations of any of the foregoing monomers/prepolymers may optionally be employed.

In one preferred embodiment, vinyl and epoxy functional silanes, such as the vinyl triethoxy silane and vinyl trimethoxy silate monomers described *supra,* are added to the grafting solution in order to provide improved paintability and scratch resistance to the grafted surface. Such an improved surface allows the grafted articles to be readily painted or marked in any color treated with any other useful adhesives or coatings after manufacture. With these improved surface properties, the grafted surface can be easily color-coded after manufacture, and/or marked with letters, numbers and other indicia. In another preferred embodiment, the grafted articles can e readily fixed or affixed to other articles by means of adhesive or glue-type systems. In an optional preferred embodiment, grafting of the interior surface of, for example, a PE-based carrier pipe can allow post-manufacture application of art-known coatings that will reduce solvent penetration fo the carrierpipe and/or retard microbial growth within a fluid-filled system of pipes, as needed.

In another preferred embodiment, additional components are optionally combined with the liquid composition. Such additional components includes, e.g., one or more dyes or pigments that impart a heat-reflective property to the grafted coating, as well as with any other art-known components commonly added to paints and coatings. Such reflective colorants include, simply by way of example, finely divided metal powders, in a proportion sufficient to give the finished grafted coating a metallic and reflective appearance. Such metal powders, include, without limitation, aluminum, copper, brass, stainless steel, gold, chromium and/or any other suitable powdered material that will impart a heat reflective luster. Optionally, other reflective colorants are employed, separately or in combination with metallic powders. Such additional reflective colorants include, for example, powdered titanium dioxide, zinc oxide, and/or combinations thereof, in proportions that impart a reflective white appearance to the finished coating.

In a further preferred embodiment, suitable inorganic or organic dyes or pigments that impart a marking color that is not white or metallic are mixed into the grafting solution or covalently linked by art-known methods to one or more of the components of the liquid composition. These include colorants that impart red, green, orange, yellow, blue, violet and variations of these. Suitable colorants for this purpose include, simply by way of example, Tint Ayd EP or UL (Red), green yellow, and/or combinations thereof, that are commercially available, for example, from Daniel Products, Jersey City, New Jersey). Additional such pigments or colorants include, e.g., zirconium oxide, zircon, zinc oxide, iron oxide, antimony oxide, and particularly weather resistant coated types of TiO₂. The pigments may also be blended with a suitable extender material which does not contribute significantly to hiding power. Suitable extenders include silica, baryte, calcium suflate, magnesium silicate (talc), aluminum oxide, aluminum silicate, calcium silicate, calcium carbonate (mica), potassium aluminum silicate and other clays or clay-like materials. Where present, the pigments and extenders are normally present at a level of from about 0.1 to about 1.0 parts by weight per part by weight of the polmer components of the grafting composition, on a dry weight basis.

Further optional components of the liquid composition of the grafting solution and of the formed graft coating include, for example, anti-oxidants, U.V. absorbing compounds, and other stabilizers well known to the art in art-known proportions. The composition of this invention may also optionally include other ingredients in amounts which are commonly included in paint and lacquer formulations such, wetting agents, surfactants, bactericides, fungicides, mildew inhibitors, emulsifiers, suspending agents, flow control agents such as waxes or was dispersions, level agents, thickening agents, pH control agents, slip agents such as silica or clay and the like.

In a still further embodiment, any of the above-described monomers, including, simply by way of example, dispersed polyurethane in combination with, e.g., epoxy prepolymers Epi-Rez™ (Shell Chemical Co., Parsippany, New Jersey), and NeoRez R9679™ (Avecia, Inc., Charlotte, North Carolina), are pre-linked with suitable colored dyes or pigments by art-known methods in order to provide a fully grafted and permanently colored surface to the treated PE substrates. Methods for linking dyes or pigments to these monomers are art-known. For example, the desired colorants and/or pigments are dissolved in monomers/prepolymer solution and then applied onto the desired substrate by any effective method (e.g., dipping or spraying), following by curing at, e.g., at about 150°F for about 20 to about 30 minutes.

Prepolymers and/or monomers are preferably employed in the grafting solution in a concentration ranging from about 0.1 to about 50%, by weight, relative to the solution. More preferably, the prepolymers and/or monomers are employed in a concentration ranging from about 0.1 to about 20%, by weight, relative to the solution.

Thus, the desired reagent, e.g., prepolymer(s) and/or monomers, catalyst, graft initiator system and other ingredients of the composition are mixed n a container with a compatible solvent or solvents to form Part A.

In yet a still further embodiment, one or more flame retardant agent or agents are added to the formulation. E.g., are added to Part A. Any art-known flame-retardant composition that is compatible and miscible with the components and solvents of the formulation is optionally employed. For example, art-known organic or inorganic phosphorous-based flame retardants are readily employed.

In particular, the flame retardant is a phosphorous-based flame retardant such as, for example, chlorinated phosphate esters, melamine derivatives, oligomeric phosphate esters, bromoaryl ether/phosphate product, and phosphonates. Exemplary flame retardants include dimethyl methylphosphonat, diethyl-N, N-bis (2-hydroxyethyl) aminomethyl phosphonate, oligomeric chloroalky phosphate/phosphonate, tri (1,3-dichloroisopropyl) phosphate, oligomeric phosphonate, to name but a few.

These types of flame retarding agents, and others, are available, e.g., from Akzo Nobel Chemicals, Inc., Dobbs Ferry, New York, under the tradename of Fyrol†™. Additional flame retardants include, for example, isopropylated triaryl phospates, aklyl aryl phosphates, t-buryl triaryl phosphates, triaryl phosphates and resorcinol diphenyl phosphate, which are available, e.g., from AkzonNobel Chemicals, Inc., *supra*, under the tradenames of Fyroflex™ and Phosflex™. The Akzo Phosflex™ products include, e.g., tributyl phosphate, isopropylated triphenyl phosphate ester, to name but a few.

As exemplified herein, dimethyl methylphosphonate, available as Fyrol™ DMMP from Akzo Nobel Chemicals, Inc., is mixed into the formulation, alone and/or in combination with any other suitable flame retardant material. The following table summarizes the flame retardant additives available from Akzo Nobel Chemicals, Inc., by both generic and trade names, and is provided for the convenience of the reader, and is not intended to limit the scope of the invention in any way.

### Chlorinated Phosphate Esters

| Akzo Tradename | |
|---|---|
| Fyrol™ FR2 | tri (1, 3-dichloroisopropyl) phosphate |
| Fyrol™ CEF | tri (2-chloroethyl) phosphate |
| Fyrol™ PCF | tri (2-chloroisopropyl) phosphate |
| Fyrol™ 38 | tri [1, 3-dichloroisopropyl] phosphate |
| | |

| | Oligomeric Phosphate Esters |
|---|---|
| Fyrol™ 25 | oligomeric chloroalkyl phosphate/phosphonate |
| Fyrol™ 51 | oligomeric Phosphonates |
| Fyrol™ AH | |
| Fyrol™ 99 | oligomeric chloroalkyl phosphate |
| | |

| | Inorganic Phosphates |
|---|---|
| Fyrex™ | diammonium and monoammonium phosphate salt |
| Flexible Fyrex™ | diammonium and monoammonium phosphate salt |

### Monomeric and Oligomeric Phosphonates

| | |
|---|---|
| Fyrol™ DMMP | dimethyl methylphosphonate |
| Fyrol™ 6 | diethyl N,N bis [2-hydroxyethyl] aminomethyl phosphonate |
| | |
| | Melamine Derivatives |
| Fyrol™ MC | melamine cyanurate |
| Fyrol™ MP | melamine phosphate |
| | Bromoaryl Ether/Phosphate Product |
| Fyrol™ PBR | pentabromodiphenyl oxide/phosphate ester |

Flame retardant(s) are added to Part A in a proportion that enhances the flame retardant properties of the graft coating without impairing other desirable properties as described and defined herein. Thus, based on the foregoing, the artisan will appreciate what amounts/proportions of flame retardant to add to Part A. Simply by way of example, the flame retardant component(s) is added to Part A in a proportion of about 0.1 wt percent to about 10 wt percent. More particularly, the flame retardant is added to Part A in a proportion ranging from about 0.5 wt percent to about 5 wt percent. Preferably, when the flame retardant is, e.g., Fyrol™ DMPP, it s added in a proportion ranging from about 0.5 wt percent to about 3 wt percent, or more.

The pH of the formulated liquid composition should preferably be in the range of from about 6-8, and appropriate amounts of a suitable acid, e.g., phosphoric or acetic acids or a base, e.g. sodium hydroxide, ammonia or ammonium hydroxide, may be included into the composition to adjust the pH as necessary.

### Formulation of Part B

Part B of the grafting solution is prepared as a separate solution to contain a polymerization promoter, such as a crosslinking compound. This strategy avoids premature gelation or hardening of the composition over periods of storage. Suitable crosslinking compounds include any art-known crosslinkers that will react with, and enhance crosslinking of the monomers or prepolymers employed for the grafting process. Such a polymerization promoter is particularly desired where the polymeric component contains functional groups which are capable of undergoing ionic condensation reactions, e.g., carboxy, hydroxy or epoxy.

Suitable polymerization promoters or crosslinking agents include melamine based amino resins such as hexamethoxymethylmelamine, benzoguanamine resins, urea formaldehyde resins, glycoluryl-based resins and like materials. Preferred crosslinking agents are those which are active at ambient temperatures, i.e., from about 20 to about 30°C and include epoxy silanes such as gamma glycidoxypropyltrimethoxy silane, beta-(3, 4-epoxycyclohexyl) ethyltrimethoxy silane and polyfunctional aziridines. In particular, the selected crosslinker is reactive with prepolymer or polmer carboxyl groups.

The crosslinker exemplified herein is a polyfunctional aziridine liquid crosslinker, such as, for example, 1-aziridinepropanoic acid, 2-methl-, 2ethyl-2-(3-(2-methyl-1-aziridinyl)-1-oxypropoxy) methyl)-1,3-propandiyl ester marketed by Zeneca Resin, Wilmington, Mass., under the tradename Crosslinker CX-100™. This is a trifunctional material with an equivalent weight of 15 6, that is used to crosslink monomers, prepolymers and/or polymers with reactive carboxyl functionality, in both water-based and organic solvent-based systems.

Optionally, other art-known components are provided in Part B, include, simply by way of example, hardeners stabilizers and the like. For those embodiments comprising epoxy monomers or precursors, hardener or curing agents include, e.g., hardeners or curing agents such as, for example, those comprising amidoamines, polyamides, cycloaliphatic amines and the like. Polyamine epoxy curing agents or hardeners, e.g., including those comprising trimethylhexamethylenediamine, are commercially available, for example, from Air Products and Chemicals, Inc., Allentown, Pennsylvania).

### Formulating the Grafting Solution

Parts A and B are mixed in a suitable proportion and stirred to a uniform solution. Examples are provided below of the type of grafting solutions that may be employed in the method according to the present invention.

### Solvent-Based Grafting Formulation with Urethane Prepolymer

| **Table 1** | **Parts by Weight** |
|---|---|
| **PART A** | |
| Aliphatic Moisture Curing Urethane M27-X-63 | 100.0 |
| Toluene | 10.0 |
| Aluminum Paste 251 PA | 8.0 |
| Silquest™ Silaten A0171™ | 1.0 |
| (Osi Specialities, Inc., Danbury Connecticut) MEK-Peroxide 0.1% in MEK solution) | 0.2 |
| Silver Perchlorate (0.1% in MEK solution) | 0.1 |

| **PART B** | |
|---|---|
| Crosslinker CX-100 | 1.8 |

### Water-Based Grafting Formulation with Urethane Prepolymer

| **Table 2** | **Parts by Weight** |
|---|---|
| **PART A** | |
| Urethane Prepolymer NeoRez 9679 | 100.0 |
| Epi-Rez Resin 3515-W-60 | 7.0 |
| Deionized water ("DIW") | 20.0 |
| E-B Solvent | 15.0 |
| Aluminum Paste 251 PA | 8.0 |
| Silquest™ Silane A-151 | 1.0 |
| (Witco OrganoSilicones Group/OSi Specialties, Inc.) | 0.2 |
| Ferrum Ammonium Sulfate (1% in water solution) Urea Peroxide (1% in water solution) | 0.1 |

| **PART B** | |
|---|---|
| Crosslinker CX-100 | 2.4 |

### Water-Based Grafting Formulation with Urethane and Epoxy Prepolymers

| **Table 3** | **Parts by Weight** |
|---|---|
| **PART A** | |
| Urethane Prepolymer NeoRez 9679 | 100.0 |
| Epi-Rez Resin 3515-W-60 | 7.0 |
| DIW | 7.0 |
| Tint Ayd WD2673 | 8.0 |
| Silquest™ Silane 151 | 1.0 |
| (Witco OrganoSilicones Group/OSi Specialties, Inc.) | |
| Ferrum Ammonium Sulfate (1% in water solution) | 0.2 |
| Urea Peroxide (1% in water solution) | 0.1 |

| **PART B** | |
|---|---|
| Crosslinker CX-100 | 2.5 |

### Organic Solvent-Based Grafting Solution-1 with Epoxy Prepolymer

| **Table 4** | **Parts by Weight** |
|---|---|
| **PART A** | |
| * (a) Epoxy prepolymer Araldite GZ 488-N-40 | 100.0 |
| Epoxy Resin (Ciba Geigy Corp.) | |
| (b) D.R.R. G84 EK 40 | 100.0 |
| Epoxy Resin (Dow Chemical) | |
| Methyl Ethyl Ketone | 75.0 |
| Xylene | 20.0 |
| Aluminum Paste Eternabrite Primier 251 PA | 8.0 |
| Methy Ethyl Ketone Peroxide | 0.2 |
| Silver Perhclorate 0.1% (methyl ethyl ketone solution) | 0.2 |
| Silquest™ Silane A-151 (Osi Specialties, Inc., Danbury Connecticut) | 0.5 |

| **PART B** | |
|---|---|
| Desmodue CB-75 | 5.0 |
| Aromatic polyisocyanate | |
| (Bayer Indust. Chemical Div.) | |
| Xylene | 15.0 |
| **Optionally*, either epoxy resin (a) or (b) can be used, | |
| but (a) was employed in this example, | |

### Organic Solvent-Based Grafting

### Solution-2 with Epoxy Prepolymer and Flame Retardant

| **Table 5** | **Parts by Weight** |
|---|---|
| **PART A** | |
| Epoxy prepolymer Araldite GZ 488-N-40™ (Ciba Geigy) | 3500.0 |
| Methyl ethyl ketone | 2625.0 |
| Xylene | 700.0 |
| Cellusolve acetate (EE Acetate™ Pride Solvents and Chem. Co.) | 350.0 |
| Aluminium paste 251 AP | 210.0 |
| Silquest™ Silane A-187 (Witco OrganoSilicones Group/OSi Specialties, Inc.) | 50.0 |
| Ferrum ammonium sulfate | 25.0 |
| 1 % MEK solution | |
| Silver perchlorate 1 % MEK solution | 25.0 |
| Fyrol™ DMMP (Akzo Nobel Chemicals, Inc., Dobbs Ferry, New York) | 1000.0 |

| **PART B** | |
|---|---|
| Urethane prepolymer | 240.0 |
| Aromatic Polyisocyanate | |
| Desmodur CB-75™ (Bayer Indust. Chem. Div.) | |
| Xylene | 500.0 |

### Aluminum Color Graft Coating

| **Table 6** | **Parts by Weight** |
|---|---|
| **PART A** | |
| Epoxy prepolymer | |
| Araldite GZ 488N40 | 100.0 |
| | |
| Methy Ethyl Ketone | 75.00 |
| Xylene | 20.00 |
| Cellosolve acetate | 10.00 |
| Silane A1100 | 2.28 |
| Fyrol™ DMMP | 31.50 |
| Silver perchlorate 0.1% solution | 0.21 |
| Aluminum paste 251A | 4.28 |
| MEK peroxide 1.1% MEK solution | 0.20 |

| **PART B** | |
|---|---|
| Desmodue CB-75™ (Bayer Indust. Chem. Div.) | 6.86 |
| Xylene | 14.28 |

### Clear Grafting Coating

| **Table 7** | **Parts by Weight** |
|---|---|
| **PART A** | |
| Epoxy prepolymer Epon 815 | 100.00 |
| Methyl Ethyl Ketone | 65.50 |
| Toluene | 18.75 |
| Fyrol™ DMMP | 25.00 |
| Silane A1100 | 2.50 |
| Silver perchlorate 1.1% MEK solution | 0.10 |
| MEK peroxide 1.1% MEK solution | 0.10 |

| **PART B** | |
|---|---|
| Amine hardener Ancamine™ 1617 | 50.00 |
| (Epoxy hardener or curing agent comprising | |
| trimethylhexamethylenediamine from Air Products | |
| and Chemicals, Inc., Allentown, Pennsylvania) | |

### Application of the Grafting Solution to the Substrate

After the grafting solution has been prepared in the manner described above the grafting solution is applied to the substrate. The grafting solution is applied to a PE substrate, exemplified as HDPE, by any available art-known method, including e.g., brushing, spraying, dipping, spin coating, vapor deposition, and the like. Preferably the grafting solution is applied with a spray gun of the type known in the art. The viscosity of the grafting solution is adjusted as needed, so that, for example, it is sufficiently viscous for application by dipping or brushing, without significant dripping or running of the applied solution, or sufficiently thin when optionally sprayed onto the surface to be treated.

### Application of the Fiberglass to Coated Substrate

After the grafting solution has been applied in the manner described above a layer of fiberglass material, in the form of fiberglass granulated fiber, is applied on top of the grafting solution. Many known fiberglass materials, in the form of granulated fiberglass fiber, may be utilized.

The fiberglass is preferably applied immediately after the grafting solution has been applied to the substrate. However, the fiberglass may be applied at any time after the grafting solution has been applied as long as the grafting solution has not dried to such an extent that it is no longer "tacky". The grafting solution must be at least "tacky" to enable the fiberglass to properly adhere to the grafting solution.

In the case where a fiberglass mesh is used (not according to the invention) the fiberglass mesh is manually applied to the coated substrate such that single layer of the mesh entirely covers the coated substrate. It is critical that the mesh is applied in a manner such that the mesh is smooth against the coated substrate, i.e. such that no air bubbles or pockets are formed between the mesh and the coated substrate. It will be apparent to those skilled in the art that other techniques, both manual and automated, may be employed to apply the fiberglass mesh to the coated substrate.

In the case where granulated fiberglass fiber is used the granulated fiberglass fiber is preferably applied to the coated substrate in the following manner. The granulated fiberglass fiber is placed onto of a mesh filter arranged above the coated substrate. The granulated fiberglass fiber is then placed on top of the mesh filter. Then mesh filter is then vibrated causing the granulated fiberglass fiber to pass through the filter and fall onto the coated substrate arranged below the filter. The granulated fiberglass fiber is applied in an amount such that it covers the surface of the coated substrate. The use of the mesh filter ensures that the granulated fiberglass fiber is evenly disbursed over the surface of the coated substrate. In the case where the substrate is a pipe or other structure having a circular cross section it is necessary to simultaneously rotate the substrate as the filter is vibrated to ensure that an even coating of the granulated fiberglass fiber is even disbursed over the entice surface of the coated substrate. It will be apparent to those skilled in the art that other techniques, both manul and automated, may be employed to apply the granulated fiberglass fiber to the coated substrate.

### Application of Additional Grafting Solution

After the fiberglass, in the form of granulated fiberglass fiber, has been applied to the coated substrate additional grafting solution, i.e. the same grafting solution as applied in the first of the method discussed *supra*, is applied on top of the fiberglass. Although preferably the same grafting solution is used in this step as in the first step of the method described above it is possible that different grafting solutions could be used. The grafting solution is applied in the same manner discussed above, i.e. preferably with the use of a spray gun although any other known technique may also be used. The grafting solution is applied in an amount such that the fiberglass is completely covered with grafting solution.

After the additional grafting solution has been applied the substrate is air dried, and then cured by the application of heat for a time period ranging, e.g., from about 30 minutes to about 4 hours, at a temperature ranging, e.g., from about 40 to about 80 degrees C. When heat curing is undesirable, the coated substrate can optionally be allowed to cure at ambient temperature, e.g., 25-30 degrees C, for up to 6 or more days.

### Simultaneous Application of Grafting Solution and Fiberglass

In another embodiment of the method according to the present invention the grafting solution and the fiberglass may be applied to the substrate in a single step. However this technique is limited to the use of granulated fiberglass fiber and cannot be used with fiberglass mesh. In this embodiment of the invention the grafting solution and the granulated fiberglass fiber are simultaneously applied to the substrate as a mixture through the use of a spray gun having a first nozzle for dispensing the grafting solution and a second nozzle for dispensing the granulated fiberglass fiber. Spray guns of this type are well known to those skilled in the art. The fiberglass and grafting solution mixture is applied to the substrate such that the substrate is completely covered with the mixture. Although the fiberglass and grafting solution mixture is preferably applied with the use of a spray gun it is possible that other know techniques could be used. For example, it is possible that the grafting solution and the granulated fiberglass fiber could be premixed and then the mixture applied by hand. In addition it will be apparent to those skilled in the art that other techniques, both manul and automated, may be employed to apply the granulated fiberglass fiber to the coated substrate.

After the granulated fiberglass fiber and grafting solution mixture has been applied to the substrate the substrate is dried in the same manner described above. That is, the substrate is air dried, and then cured by the application of heat for a time period ranging, e.g., from about 30 minutes to about 4 hours, at a temperature ranging, e.g., from about 40 to about 80 degrees C. When heat curing is undesirable, the coated substrate can optionally be allowed to cure at ambient temperature, e.g., 25-30 degrees C, for up to 6 or more days.

### EXAMPLE

### Thermal Testing

The example described below serves to or provide further appreciation of improved fire resistant properties obtained when a PE substrate is treated by the method according to the present invention. In addition the example illustrates the improved fire resistant properties of a PE substrate treated by the method according to the present invention as compared to a PE substrate that is simply coated by a grafting solution.

As mentioned above in the "Background of the Invention" section above although prior art processes have been successful in improving the fire retardant properties of HDPE these properties have not been improved to such an extent to make pipe constructed from HDPE commercial viable and/or in compliance with fire retardant standards relating to the use of materials in certain industries. For example, prior art HDPE pipe treated with fire retardant grafting coatings have failed to comply with U.S. Navy standards which are dictated by IMO 653 and IMO 753 and/or German industrial fire safety requirements under DIN 4102.

IMO 653 requires that a test specimen of a certain size and shape be exposed to 950°C for ten minutes. If after ten minutes the test specimen is ignited the spread of the flame must be limited. Moreover, if the test specimen is giving off burning drops the burning drops must be self-extinguishing before the drops reach the floor which is a given distance from the test specimen.

IMO 653 further specifies that if the test specimen is not ignited after the ten minute exposure to 950°C then a second test must be satisfied in which the specimen is exposed to a direct flame as well as exposed to 950°C for ten minutes. IMO 653 is hereby incorporated herein in its entirety by reference.

### Testing Method

In brief, two test samples of HDPE materials were prepared. The first sample was simply coated with the grafting solution set forth in Table 1 above. The second sample was prepared in accordance with the method according to the invention. Specifically the second sample was first coated with the grafting solution set forth in Table 1 above. Thereafter a layer of fiberglass mesh was applied to the coated substrate. In the test sample fiberglass mesh manufactured by ordinary woven roving was utilized. After the fiberglass was applied to the substrate an additional grafting solution of the type set forth in Table 1 was applied in an amount sufficient to cover the fiberglass, Each of the specimens measured 155 mm wide by 800 mm long. Each of the test samples had a thickness of approximately 50 mm. Each specimen included a outer layer of PE which measured approximately 6 mm, an intermediate layer of polyurethane foam which measured approximately 41 mm and inner layer of steel pipe which measured 3 mm.

A high performance E-glass was used in the test, the properties of the fiberglass are set forth in the chart below. The fiberglass is commercially available from Saint-Gobin Vetrotex under the name P368.

### TECHNICAL CHARACTERISTICS

| Filament Diameter (µm) | Fiber length (mm) | Loss on ignition |
|---|---|---|
| 15 | 12 | 0.75 |

### MECHANICAL PROPERTIES

| | |
|---|---|
| Glass Content, % Weight | 30 |
| Tensile strength, Mpa (psi) | 75 |
| Flexural strength, Mpa (psi) | 115 |
| Flexural modulus, Mpa (psi) | 5300 |
| Unnotched Charpy Impact, Kj/m² (Ft.-lbs/inch) | 29 |
| Notched Izod Impact, Kj/m² (Ft.-lbs/inch) | 9 |
| Heat distortion temperature, °C (°F) | 140 |

Each of the test samples were then subjected to a 950°C environment generated by a gas-fired heating panel in an apparatus designed for this purpose, a Model B32 SX designed by BSM. The heating panel was rectangular in shape, and measured 25 x 51 cm and was rated at 11800 Watts. Simultaneously to the exposure of the test samples to the 950° environment the test samples were also exposed to a direct flame.

The B32 SX testing apparatus is designed with a heat shield that allows the heating panel to reach a predetermined, uniform temperature before the test cycle begins. Thus, the heating panel was turned on, and after the testing environment reached 950°C, the samples were clamped into the apparatus so that the samples were spaced approximately 15 mm from the flame. The samples were observed and the elapsed time to ignition (open fire and the emission of burning drops) was recorded for each sample.

### Results for Sample Treated with Grafting Solution Only

00:00 min.: sample was placed in testing stand.
00:40 min.: specimen ignited.
02:20 min.: drops begin falling from specimen.
03:00 min.: test specimen fully ignited.
04:00 min.: test terminated due to danger of damaging test equipment.

### Results for Sample Treated with Grafting Solution, Fiberglass and Additional Grafting Solution

00:00 min.: sample was placed in testing stand.
01:30 min.: small bursts of frame near test flame.
04:00 min.: small bursts of fire in the test specimen which are self quenching.
08:00 min.: test specimen is slightly ignited, however, the surface remains stable and does not drip.
11:30 min.: test specimen is on fire but the surface remains stable and does not drip, test specimen removed from stand.

These above results confirm that a significant increase in heat resistance is provided by the method described herein.

It is emphasized that although the present invention has been described above in connection with the use of fiberglass as the fire resistant fiber material it is possible that other fire resistant fiber materials could be used as will be apparent to those skilled in the art.

## Claims

1. A graft coated substrate, the substrate comprising polyethylene, a graft coating covalently bonded thereto, and granulated fire resistant fiber material adhered to said substrate by said graft coating, wherein said graft coating comprises a non-polyethylene polymer or copolymer and wherein, the graft coating comprises a polymer selected from the group consisting of a urethane, an epoxy, a polysilicone, and combinations or copolymers thereof.

2. The graft coated substrate of claim 1 wherein the graft coating comprises a fire retarding agent and composes materials selected from the group consisting of a pigment or colorant, and combinations thereof.

3. The graft coated substrate of claim 1 that comprises a polyethylene having an average molecular weight ranging from about 100,000 amu for high density polyethylene to at least 6x10⁶ amu for high density ultra high molecular weight polyethylene.

4. The graft coated substrate of claim 1, wherein the substrate comprises a noncrosslinked or crosslinked polyethylene selected from the group consisting of low density polyethylene, a linear low density polyethylene, a medium density polyethylene, a high density polyethylene, a high density, high molecular weight polyethylene, a high density, ultra high molecular weight polyethylene, and combinations thereof.

5. The graft coated substrate of claim 1 that is formed into an article of manufacture selected from the group consisting of a pipe or tube, a curved or planar sheet, a beam, a board, a rod or shaft, a container for solids or fluids, and combinations thereof.

6. The graft coated substrate of claim 5 wherein the pipe is selected from the group consisting of straight pipe, bent pipe, a straight pipe joint, an elbow joint, an end-cap, a heat- shrinkable joint, and combinations thereof.

7. The graft coated substrate of claim 5 wherein the pipe is selected from the group consisting of single wall pipe, pipe with a plurality of walls nested one within the other, pipe with a single insulating layer between two concentric walls, and pipe with a plurality of concentric insulating layers.

8. The graft coated substrate of claim 1 wherein said fire resistant fiber material is granulated fiberglass fiber.

9. A method for improving the fire resistant properties of a solid polyethylene substrate, comprising:
(a) applying to a solid polyethylene substrate, a liquid composition comprising effective amounts of a monomer, prepolymer, a graft initiator, a catalyst and a polymerization promoter, wherein the liquid composition further comprises a polymer selected from the group consisting of a vinyl polymer, a urethane, an epoxy, a polysilicone and combinations thereof, wherein said polymer is suitable for grafting to the substrate, under conditions effective to promote grafting of the monomer or prepolymer to the solid polyethylene substrate to form a coating on the substrate,
(b) applying a granulated fiberglass fiber material on top of the coated substrate,
(c) applying additional liquid composition of the type described in step (a) on top of the layer of granulated fiberglass material applied in step (b), and
(d) curing the applied composition,
wherein said substrate is a substrate having a substantially circular cross section and said granulated fiberglass fiber is applied by a vibrated mesh filter upon which said granulated fiberglass fiber is disposed and simultaneously rotating said substrate having a substantially circular cross section, whereby said granulated fiberglass fiber is evenly distributed over a surface of said substrate.

10. The method of claim 9 wherein the monomer or prepolymer is selected from the group consisting of a vinyl monomer, a urethane monomer, an epoxy monomer, a silicon-based monomer and combinations thereof

11. The method of claim 9 wherein the graft initiator is a metal ion, present in an amount effective to initiate radical formation in the polyethylene substrate.

12. The method of claim 11 wherein the graft initiator is present in a concentration ranging from about 0. 01 to about 1.0%, by weight.

13. The method of claim 11 wherein the graft initiator is selected from the group consisting of ions of iron, silver, cobalt, copper, cerium and combinations thereof,.

14. The method of claim 9 wherein the catalyst is a peroxide present in the liquid composition in a concentration ranging from about 0.1 to about 5% by weight.

15. The method of claim 9 wherein the catalyst is an selected from the group consisting of benzoyl peroxide, methyl ethyl ketone peroxide, 1-butyl hydroperoxide and combinations thereof.

16. The method of claim 9 wherein the polymerization promoter is present in a concentration effective to react with and crosslink, the monomer or prepolymer.

17. The method of claim 16 wherein the polymerization promoter is a polyfunctional aziridine liquid crosslinker.

18. The method of claim 9 wherein the substrate is a polyethylene having a density ranging from about 0.930 g cm⁻³ to about 0.980 g cm⁻³.

19. The method of claim 9 wherein the liquid composition is applied to the substrate by a method selected from the group consisting of brushing, dipping, spraying and combinations thereof.

20. The method of claim 9 wherein the applied composition is self-curing.

21. The method of claim 9 wherein the applied composition is cured by heating the coated substrate at a temperature and for a duration sufficient to cure the applied coating.

22. The method of claim 21 wherein the applied composition is cured at a temperature ranging from about 16 to about 93 degrees C (i.e. 60 to about 200 degrees F), for a time period ranging from about 30 minutes to about 6 days.

23. The method of claim 9 wherein the liquid composition further comprises a compatible flame retardant agent.

24. The method of claim 23 wherein the flame retardant agent is a phosphorous-based flame retardant.

25. The method of claim 23 wherein the flame retardant agent is selected from the group consisting of chlorinated phosphate esters, melamine derivatives, oligomeric phosphate esters, bromoaryl ether/phosphate product, and phosphonates.

26. The method of claim 23 wherein the flame retardant is selected from the group consisting of dimethyl methylphosphonate, diethyl-N,N-bis(2-hydroxyethyl)aminomethyl phosphonate, oligomeric phosphonate, tributyl phosphate isopropylated triphenyl phosphate ester, and combinations thereof.

27. The method of claim 26 wherein the flame retardant agent is dimethyl methylphosphonate.

28. The method of claim 9 wherein the liquid composition is first prepared without the polymerization promoter, and the process further composes the step of mixing the polymerization promoter with the liquid composition prior to application of the liquid composition to the substrate.

29. A solid polyethylene substrate prepared by the method of claim 9.

30. An article of manufacture prepared by the method of claim 9.

31. A method for improving the fire resistant properties of a solid polyethylene substrate, comprising:
(a) applying to a solid polyethylene substrate (I) a liquid composition that includes effective amounts of a monomer or prepolymer, a graft initiator, a catalyst and a polymerization promoter, and (ii) granulated fiberglass fiber material, under conditions effective to promote grafting of the monomer or prepolymer to the solid polyethylene substrate to form a coating on the substrate, and
(b) curing the applied composition.

32. The method of claim 31, wherein said mixture is applied using a spray gun.

33. The method of claim 32, wherein said spray gun includes a first nozzle for dispensing said liquid composition and a second nozzle for dispensing said granulated fiberglass fiber material.

## Patentansprüche

1. Pfropfbeschichtetes Substrat, wobei das Substrat Polyethylen, eine daran kovalent gebundene Pfropfbeschichtung und durch die Pfropfbeschichtung am Substrat angeklebtes granuliertes flammhemmendes Fasermaterial umfasst, wobei die Pfropfbeschichtung ein nicht aus Polyethylen bestehendes Polymer oder Copolymer umfasst und wobei die Pfropfbeschichtung ein Polymer, ausgewählt aus der Gruppe bestehend aus einem Urethan, einem Epoxid, einem Polysilikon und Kombinationen oder Copolymeren davon, umfasst.

2. Pfropfbeschichtetes Substrat nach Anspruch 1, wobei die Pfropfbeschichtung ein Flammschutzmittel umfasst und Materialien, ausgewählt aus der Gruppe bestehend aus einem Pigment oder Farbstoff und Kombinationen davon zusammenstellt.

3. Pfropfbeschichtetes Substrat nach Anspruch 1, das ein Polyethylen mit einem durchschnittlichen Molekulargewicht im Bereich von etwa 100.000 amu für Polyethylen hoher Dichte bis mindestens 6x10⁶ amu für Polyethylen hoher Dichte mit ultrahohem Molekulargewicht umfasst.

4. Pfropfbeschichtetes Substrat nach Anspruch 1, wobei das Substrat ein nicht vernetztes oder vernetztes Polyethylen, ausgewählt aus der Gruppe bestehend aus Polyethylen niedriger Dichte, einem linearen Polyethylen niedriger Dichte, einem Polyethylen mittlerer Dichte, einem Polyethylen hoher Dichte, einem Polyethylen hoher Dichte mit hohem Molekulargewicht, einem Polyethylen hoher Dichte mit ultrahohem Molekulargewicht und Kombinationen davon umfasst.

5. Pfropfbeschichtetes Substrat nach Anspruch 1, das zu einem Fertigungsartikel gebildet wird, ausgewählt aus der Gruppe bestehend aus einem Rohr oder Schlauch, einem gekrümmten oder planaren Flächengebilde, einem Balken, einer Tafel, einem Stab oder einem Schaft, einem Behälter für Feststoffe oder Flüssigkeiten und Kombinationen davon.

6. Pfropfbeschichtetes Substrat nach Anspruch 5, wobei das Rohr ausgewählt ist aus der Gruppe bestehend aus geradem Rohr, gebogenem Rohr, einem geraden Rohrverbindungsstück, einem Ellbogenverbindungsstück, einer Endkappe, einem wärmeschrumpfbaren Verbindungsstück und Kombinationen davon.

7. Pfropfbeschichtetes Substrat nach Anspruch 5, wobei das Rohr ausgewählt ist aus der Gruppe bestehend aus einwandigem Rohr, Rohr mit einer Vielzahl von ineinander verschachtelten Wänden, Rohr mit einer einzelnen Isolierschicht zwischen zwei konzentrischen Wänden und Rohr mit einer Vielzahl von konzentrischen Isolierschichten.

8. Pfropfbeschichtetes Substrat nach Anspruch 1, wobei das feuerfeste Fasermaterial granulierte Fiberglasfaser ist.

9. Verfahren zum Verbessern der feuerfesten Eigenschaften eines festen Polyethylensubstrats, umfassend:
(a) Auftragen einer flüssigen Zusammensetzung auf ein festes Polyethylensubstrat, umfassend wirksame Mengen eines Monomers, Präpolymers, eines Pfropfinitiators, eines Katalysators und eines Polymerisationsförderers, wobei die flüssige Zusammensetzung ferner ein Polymer, ausgewählt aus der Gruppe bestehend aus einem Vinylpolymer, einem Urethan, einem Epoxid, einem Polysilikon und Kombinationen davon umfasst, wobei das Polymer unter zum Fördern von Pfropfung des Monomers oder Präpolymers auf das feste Polyethylensubstrat wirksamen Bedingungen, zum Pfropfen auf das Substrat geeignet ist, um eine Beschichtung auf dem Substrat zu bilden,
(b) Auftragen eines granulierten Fiberglasfasermaterials auf die Oberseite des beschichteten Substrats,
(c) Auftragen zusätzlicher flüssiger Zusammensetzung der in Schritt (a) beschriebenen Art auf die Schicht des in Schritt (b) aufgetragenen granulierten Fiberglasfasermaterials, und
(d) Härten der aufgetragenen Zusammensetzung,
wobei das Substrat ein Substrat mit im Wesentlichen kreisförmigem Querschnitt ist und die granulierte Fiberglasfaser durch einen vibrierenden Netzfilter aufgetragen wird, auf welchem die granulierte Fiberglasfaser angebracht ist und gleichzeitig das Substrat mit im Wesentlichen kreisförmigen Querschnitt rotiert, wobei die granulierte Fiberglasfaser gleichmäßig über die Oberfläche des Substrats verteilt wird.

10. Verfahren nach Anspruch 9, wobei das Monomer oder Präpolymer ausgewählt ist aus der Gruppe bestehend aus einem Vinylmonomer, einem Urethanmonomer, einem Epoxidmonomer, einem silikonbasierten Monomer und Kombinationen davon.

11. Verfahren nach Anspruch 9, wobei der Pfropfinitiator ein Metallion ist, das in einer zum Initiieren von Radikalbildung im Polyethylensubstrat wirksamen Menge vorliegt.

12. Verfahren nach Anspruch 11, wobei der Pfropfinitiator in einer Konzentration im Bereich von etwa 0, 01 bis etwa 1,0 Gewichts-% vorliegt.

13. Verfahren nach Anspruch 11, wobei der Pfropfinitiator ausgewählt ist aus der Gruppe bestehend aus Ionen von Eisen, Silber, Kobalt, Kupfer, Cer und Kombinationen davon.

14. Verfahren nach Anspruch 9, wobei der Katalysator ein in der flüssigen Zusammensetzung in einer Konzentration im Bereich von etwa 0,1 bis etwa 5 Gewichts-% vorliegendes Peroxid ist.

15. Verfahren nach Anspruch 9, wobei der Katalysator ausgewählt ist aus der Gruppe, bestehend aus Benzoylperoxid, Methylethylketonperoxid, 1-Butylhydroperoxid und Kombinationen davon.

16. Verfahren nach Anspruch 9, wobei der Polymerisationsförderer in einer Konzentration vorliegt, die wirksam ist, um mit dem Monomer und Präpolymer zu reagieren und zu vernetzen.

17. Verfahren nach Anspruch 16, wobei der Polymerisationsförderer ein polyfunktioneller flüssiger Aziridinvernetzer ist.

18. Verfahren nach Anspruch 9, wobei das Substrat ein Polyethylen mit einer Dichte im Bereich von etwa 0,930 g cm⁻³ bis etwa 0,980 g cm⁻³ ist.

19. Verfahren nach Anspruch 9, wobei die flüssige Zusammensetzung durch ein Verfahren, ausgewählt aus der Gruppe bestehend aus Bürsten, Eintauchen, Sprühen und Kombinationen davon, auf das Substrat aufgetragen wird.

20. Verfahren nach Anspruch 9, wobei die aufgetragene Zusammensetzung selbsthärtend ist.

21. Verfahren nach Anspruch 9, wobei die aufgetragene Zusammensetzung durch Erwärmen des beschichteten Substrats auf eine zum Härten der aufgetragenen Beschichtung ausreichende Temperatur und für eine ausreichende Dauer gehärtet wird.

22. Verfahren nach Anspruch 21, wobei die aufgetragene Zusammensetzung bei einer Temperatur im Bereich von etwa 16 bis etwa 93 Grad C (d. h. 60 bis etwa 200 Grad F) für eine Zeitspanne im Bereich von etwa 30 Minuten bis etwa 6 Tagen gehärtet wird.

23. Verfahren nach Anspruch 9, wobei die flüssige Zusammensetzung ferner ein kompatibles Flammschutzmittel umfasst.

24. Verfahren nach Anspruch 23, wobei das Flammschutzmittel ein phosphorbasiertes Flammschutzmittel ist.

25. Verfahren nach Anspruch 23, wobei das Flammschutzmittel ausgewählt ist aus der Gruppe bestehend aus chlorierten Phosphatestern, Melaminderivaten, oligomeren Phosphatestern, Bromarylether/phosphat-Produkten und Phosphonaten.

26. Verfahren nach Anspruch 23, wobei das Flammschutzmittel ausgewählt ist aus der Gruppe bestehend aus Dimethylmethylphosphonat, Diethyl-N,N-bis(2-hydroxyethyl)aminomethylphosphonat, oligomerem Phosphonat, Tributylphosphat, isopropyliertem Triphenylphosphatester und Kombinationen davon.

27. Verfahren nach Anspruch 26, wobei das Flammschutzmittel Dimethylmethylphosphonat ist.

28. Verfahren nach Anspruch 9, wobei die flüssige Zusammensetzung zuerst ohne den Polymerisationsförderer zubereitet wird, und der Prozess ferner die Schritte des Mischens des Polymerisationsförderers mit der flüssigen Zusammensetzung vor dem Auftragen der flüssigen Zusammensetzung auf das Substrat zusammenstellt.

29. Durch das Verfahren nach Anspruch 9 zubereitetes festes Polyethylensubstrat.

30. Durch das Verfahren nach Anspruch 9 zubereiteter Fertigungsartikel.

31. Verfahren zum Verbessern der feuerfesten Eigenschaften eines festen Polyethylensubstrats, umfassend:
(a) Auftragen auf ein festes Polyethylensubstrat einer (I) flüssigen Zusammensetzung, die eine wirksame Menge eines Monomers oder Präpolymers, einen Pfropfinitiator, eines Katalysators und eines Polymerisationsförderers einschließt, und (ii) granuliertes Fiberglasfasermaterial, unter zum Fördern von Pfropfung des Monomers oder Präpolymers auf das feste Polyethylensubstrat wirksamen Bedingungen, um eine Beschichtung auf dem Substrat zu bilden, und
(b) Härten der aufgetragenen Zusammensetzung.

32. Verfahren nach Anspruch 31, wobei die Mischung unter Verwendung einer Sprühpistole aufgetragen wird.

33. Verfahren nach Anspruch 32, wobei die Sprühpistole eine erste Düse zum Verteilen der flüssigen Zusammensetzung und eine zweite Düse zum Verteilen des granulierten Fiberglasfasermaterials einschließt.

## Revendications

1. Substrat à revêtement greffé, le substrat comprenant du polyéthylène, un revêtement greffé lié par covalence à celui-ci et un matériau en fibre granulée résistant au feu fixé par adhérence audit substrat par ledit revêtement greffé, dans lequel ledit revêtement greffé comprend un polymère ou copolymère non polyéthylène et dans lequel le revêtement greffé comprend un polymère choisi dans le groupe constitué d'un uréthane, un époxy, une polysilicone et des combinaisons ou copolymères de ceux-ci.

2. Substrat à revêtement greffé selon la revendication 1, dans lequel le revêtement greffé comprend un agent ignifuge et comprend des matériaux choisis dans le groupe constitué d'un pigment ou d'un colorant et de leurs combinaisons.

3. Substrat à revêtement greffé selon la revendication 1, qui comprend un polyéthylène possédant une masse moléculaire moyenne allant d'environ 100 000 uma pour du polyéthylène haute densité à au moins 6x10⁶ uma pour du polyéthylène haute densité à masse moléculaire ultra-élevée.

4. Substrat à revêtement greffé selon la revendication 1, où le substrat comprend un polyéthylène non réticulé ou réticulé choisi dans le groupe constitué de polyéthylène à basse densité, un polyéthylène linéaire à basse densité, un polyéthylène à densité moyenne, un polyéthylène à haute densité, un polyéthylène à masse moléculaire élevée à haute densité, un polyéthylène à masse moléculaire ultra-élevée à haute densité et leurs combinaisons.

5. Substrat à revêtement greffé selon la revendication 1, qui est formé en un article de fabrication choisi dans le groupe constitué d'un tuyau ou tube, une feuille courbée ou plane, une poutre, un panneau, une tige ou un arbre, un récipient pour matières solides ou fluides et leurs combinaisons.

6. Substrat à revêtement greffé selon la revendication 5, dans lequel le tuyau est choisi dans le groupe constitué d'un tuyau droit, un tuyau coudé, un raccord de tuyau droit, un raccord coudé, une coiffe terminale, un raccord thermorétractable et leurs combinaisons.

7. Substrat à revêtement greffé selon la revendication 5, dans lequel le tuyau est choisi dans le groupe constitué de tuyau à paroi unique, tuyau avec une pluralité de parois imbriquées les unes dans les autres, tuyau avec une couche isolante unique entre deux parois concentriques et tuyau avec une pluralité de couches isolantes concentriques.

8. Substrat à revêtement greffé selon la revendication 1, dans lequel ledit matériau de fibre résistant au feu est de la fibre granulée de fibre de verre.

9. Procédé pour améliorer les propriétés de résistance au feu d'un substrat de polyéthylène solide, comprenant :
(a) l'application, sur un substrat solide en polyéthylène, d'une composition liquide comprenant des quantités efficaces d'un monomère, d'un prépolymère, d'un initiateur de greffe, d'un catalyseur et d'un promoteur de polymérisation, dans lequel la composition liquide comprend en outre un polymère choisi dans le groupe constitué d'un polymère vinylique, un uréthane, un époxy, une polysilicone et leurs combinaisons, dans lequel ledit polymère est approprié pour greffage au substrat, dans des conditions efficaces pour promouvoir le greffage du monomère ou prépolymère au substrat solide en polyéthylène pour former un revêtement sur le substrat,
(b) l'application d'un matériau en fibre granulée de fibre de verre au-dessus du substrat revêtu,
(c) l'application de composition liquide supplémentaire du type décrit dans l'étape (a) au-dessus de la couche de matériau en fibre de verre granulée appliquée dans l'étape (b) et
(d) le durcissement de la composition appliquée,
dans lequel ledit substrat est un substrat possédant une coupe transversale sensiblement circulaire et ladite fibre granulée de fibre de verre est appliquée par un tamis filtrant vibrant sur lequel ladite fibre granulée de fibre de verre est disposée et la rotation simultanée dudit substrat possédant une coupe transversale sensiblement circulaire, moyennant quoi ladite fibre granulée de fibre de verre est uniformément répartie sur une surface dudit substrat.

10. Procédé selon la revendication 9, dans lequel le monomère ou prépolymère est choisi dans le groupe constitué d'un monomère vinylique, un monomère uréthane, un monomère époxy, un monomère à base de silicium et leurs combinaisons.

11. Procédé selon la revendication 9, dans lequel l'initiateur de greffe est un ion métallique, présent en une quantité efficace pour initier la formation de radical dans le substrat de polyéthylène.

12. Procédé selon la revendication 11, dans lequel l'initiateur de greffe est présent en une concentration allant d'environ 0, 01 à environ 1,0 % en poids.

13. Procédé selon la revendication 11, dans lequel l'initiateur de greffe est choisi dans le groupe constitué d'ions de fer, argent, cobalt, cuivre, cérium et leurs combinaisons.

14. Procédé selon la revendication 9, dans lequel le catalyseur est un peroxyde présent dans la composition liquide en une concentration allant d'environ 0,1 à environ 5 % en poids.

15. Procédé selon la revendication 9, dans lequel le catalyseur est un catalyseur choisi dans le groupe constitué de peroxyde de benzoyle, peroxyde de méthyl-éthyl-cétone, hydroperoxyde de 1-butyle et leurs combinaisons.

16. Procédé selon la revendication 9, dans lequel le promoteur de polymérisation est présent en une concentration efficace pour réagir avec, et réticuler, le monomère ou prépolymère.

17. Procédé selon la revendication 16, dans lequel le promoteur de poly-mérisation est un agent de réticulation liquide polyfonctionnel aziridine.

18. Procédé selon la revendication 9, dans lequel le substrat est un polyéthylène possédant une masse volumique allant d'environ 0,930 g cm⁻³ à environ 0,980 g cm⁻³.

19. Procédé selon la revendication 9, dans lequel la composition liquide est appliquée au substrat par un procédé choisi dans le groupe constitué de brossage, immersion, pulvérisation et leurs combinaisons.

20. Procédé selon la revendication 9, dans lequel la composition appliquée est auto-durcissable.

21. Procédé selon la revendication 9, dans lequel la composition appliquée est durcie en chauffant le substrat revêtu à une température et pendant une durée suffisantes pour durcir le revêtement appliqué.

22. Procédé selon la revendication 21, dans lequel la composition appliquée est durcie à une température allant d'environ 16 à environ 93 degrés C (c'est-à-dire 60 à environ 200 degrés F), pendant un laps de temps allant d'environ 30 minutes à environ 6 jours.

23. Procédé selon la revendication 9, dans lequel la composition liquide comprend en outre un agent ignifuge compatible.

24. Procédé selon la revendication 23, dans lequel l'agent ignifuge est un produit ignifuge à base de phosphore.

25. Procédé selon la revendication 23, dans lequel l'agent ignifuge est choisi dans le groupe constitué d'esters de phosphate chlorés, dérivés de mélamine, esters de phosphate oligomères, produit éther/phosphate de bromoaryle et phosphonates.

26. Procédé selon la revendication 23, dans lequel le produit ignifuge est choisi dans le groupe constitué de méthylphosphonate de diméthyle, phosphonate de diéthyl-N,N-bis(2-hydroxyéthyl)aminométhyle, phosphate oligomère, ester de phosphate triphényle isopropylé de phosphate de tributyle et leurs combinaisons.

27. Procédé selon la revendication 26, dans lequel l'agent ignifuge est le méthylphosphonate de diméthyle.

28. Procédé selon la revendication 9, dans lequel la composition liquide est d'abord préparée sans le promoteur de polymérisation, puis le procédé comprend en outre l'étape de mélange du promoteur de polymérisation avec la composition liquide avant application de la composition liquide au substrat.

29. Substrat solide en polyéthylène préparé par le procédé selon la revendication 9.

30. Article de fabrication préparé par le procédé selon la revendication 9.

31. Procédé pour améliorer les propriétés de résistance au feu d'un substrat de polyéthylène solide, comprenant :
(a) l'application sur un substrat solide en polyéthylène (I) d'une composition liquide qui comprend des quantités efficaces d'un monomère ou prépolymère, d'un initiateur de greffe, d'un catalyseur et d'un promoteur de polymérisation et (ii) du matériau en fibre granulée de fibre de verre, dans des conditions efficaces pour promouvoir le greffage du monomère ou prépolymère sur le substrat solide en polyéthylène pour former un revêtement sur le substrat et
(b) le durcissement de la composition appliquée.

32. Procédé selon la revendication 31, dans lequel ledit mélange est appliqué à l'aide d'un pistolet de pulvérisation.

33. Procédé selon la revendication 32, dans lequel ledit pistolet de pulvérisation comprend une première buse pour distribuer ladite composition liquide et une seconde buse pour distribuer ledit matériau en fibre granulée de fibre de verre.
